# EUROPÄISCHE PATENTANMELDUNG

(11) **EP 1 826 783 A1**
(43) Veröffentlichungstag der Anmeldung: **29.08.2007**
(21) Anmeldenummer: 07002587.9
(22) Anmeldetag: 07.02.2007
(51) Int. Cl.: H01F 1/153, H01F 1/147, H01F 41/02

(54) **Verfahren zur Herstellung von Pulververbundkernen aus nanokristallinem Magnetmaterial**

(30) Priorität: 22.02.2006 DE 102006008283
(71) Anmelder: Vacuumschmelze GmbH & Co. KG, 63450 Hanau (DE)
(72) Erfinder: Brunner, Markus, 63856 Bessenbach (DE)
(74) Vertreter: Patentanwälte Westphal, Mussgnug & Partner

(57) **Zusammenfassung**

Verfahren zur Herstellung eines gepressten Pulververbundkernes aus einer nanokristallinen Legierung der Zusammensetzung FeSiCuNbB, wobei das zur Herstellung des Magnetkemes verwendete Legierungspulver im amorphen Zustand verpresst wird.

## Beschreibung

Die Erfindung betrifft ein Verfahren zur Herstellung von Pulververbundkernen aus nanokristallinem Magnetmaterial (z. B. Vitroperm der Firma Vacuumschmelze)

Für die Verwendung als niederpermeable Speicher- oder Filterdrosseln ist der Einsatz von Magnetkernen aus weichmagnetischen Pulverwerkstoffen Stand der Technik.
Im einfachsten Fall werden diese Kerne durch Verpressen von Eisenpulvern oder Eisenlegierungspulvern (z.B. FeSi, FeAlSi, NiFe) hergestellt. Neuere Entwicklungen beschreiben die Herstellung dieser Kerne auch aus Legierungen wie sie typischerweise zur Herstellung von rascherstarrten Bändern z.B. auf FeSiB Basis eingesetzt werden.

Diesen Legierungsvarianten ist gemeinsam, daß es sich entweder um Materialien mit vergleichsweise hoher Magnetostriktion oder um Legierungen mit relativ niedrigen spezifischem elektrischen Widerstand handelt. Für den Fall eines Pulverpreßkernes führt dies zu Kernen mit erhöhten Ummagnetisierungsverlusten bei höheren Frequenzen die sich entweder auf Grund der Magnetostriktion durch vergleichsweise hohe Hystereseverluste oder aber bei den leitfähigeren Varianten durch erhöhte intrapartikuläre Wirbelstromverluste begründen.

Hier bietet der Einsatz einer Legierung auf Basis FeSiCuNbB (Vitroperm) den Vorteil, daß eine praktisch magnetostriktionsfreie Legierung mit sehr hohem spezifischem Widerstand verwendet wird.

Diese vorteilhaften Eigenschaften werden jedoch erst durch eine Wärmebehandlung bei Temperaturen > 500 °C erhalten, die, neben der Ausbildung eines für die guten weichmagnetischen Eigenschaften verantwortlichen nanokristallinen Gefüges auch zu einer extremen Versprödung der Legierung führt welche eine preßtechnische Verarbeitung des Materials in diesem Zustand praktisch ausschließt. Versucht man ein nanokristallines Pulver aus diesem Material zu verpressen erfolgt im Preßwerkzeug anstelle einer Verdichtung und Kompaktierung lediglich eine weitere Zerkleinerung der aus rascherstarrtem Band hergestellten Flakes. Diese weitere Zerkleinerung im Preßwerkzeug mit der Neubildung von elektrisch nicht isolierten Bruchkanten hat eine sehr hohe elektrische Volumenleitfähigkeit des Preßlings zur Folge und führt dann im Betrieb zu hohen elektrischen Verlusten in Form von Wirbelstromverlusten innerhalb des Magnetkernes.

Aufgabe der hier vorliegenden Erfindung ist es somit, einen Herstellverfahren anzugeben, das die Verarbeitung einer FeSiCuNbB Legierung (Vitroperm) auf dem Preßweg zur Herstellung eines Pulververbundkernes erlaubt.

Um dies realisieren zu können, ist zum einen vorgesehen, das nach der Herstellung als amorphes Band zunächst sehr duktile Vitroperm in einen Zustand zu überführen, der die rationelle Zerkleinerung zu einem Pulver (bzw. Falkes) erlaubt, der andererseits jedoch dazu führt, daß das Material noch so duktil ist, daß beim Pressen im Werkzeug mit Drücken im Bereich 1 - 20 t/cm² keine weitere Zerkleinerung des Materials mehr erfolgt.

Es wurde gefunden, daß eine für das Mahlen von Vitroperm Band hinreichende Versprödung durch eine Wärmebehandlung des Bandes bei Temperaturen zwischen 200 und 400 °C während einer Zeit von 0,5 - 8 Stunden unter Schutzgas in Verbindung mit Mahltemperaturen zwischen Raumtemperatur und der Temperatur des flüssigen Stickstoffs erreicht werden kann. Dies ergibt ein Pulver (Flakes) welches für die Weiterverarbeitung zu Preßkernen über eine hinreichende Duktilität verfügt.

Die eigentliche Formgebung des Magnetkernes durch Pressen in einem Werkzeug erfolgt dann grundsätzlich bei einer Temperatur oberhalb der Temperatur der vorangegangenen Versprödungswärmebehandlung. Dadurch wird erreicht, daß sich das Pulver (Flakes) im Preßwerkzeug vollkommen duktil verhält und jegliche weitere mechanische Zerkleinerung des Pulvers während des Pressens unterbleibt.

Zur Weiterverarbeitung des gemahlenen Vitroperm Pulvers (Flakes) zu Preßkernen erfolgt zunächst eine Beschichtung des Materials zur elektrischen Isolation der Einzelpartikel um im gepreßten Magnetkern die Ausbildung von Volumenwirbelströmen soweit wie möglich zu unterdrücken. Hierfür kommen im wesentlichen mineralische Beschichtungen, die über eine hinreichende Temperaturbeständigkeit für die abschließende Wärmebehandlung bei 540 - 580 °C besitzen in Frage. Für diesen Zweck verwendbar sind z.B. Beschichtungen auf Basis von Eisenphosphat, verschiedenste silikatische Beschichtungen (z.B. Na-Silikat, K-Silikat, Al-Silikat, Mg-Silikat) oder auch SiO₂ bildende organische Materialien wie z.B. Silane. Weiterhin ist der Einsatz von sehr feinkörnigen (< 2 µm) Keramiken z.B. auf MgO, Al₂O₃ oder SiO₂ Basis denkbar die als elektrisch isolierende Abstandshalter zwischen den einzelnen Magnetpartikeln wirken. Als weitere Komponente der Preßmischung kommen entsprechend hochtemperaturbeständige polymere Bindemittel zum Einsatz. Für diesen Zweck grundsätzlich geeignet sind Polymere aus der Gruppe der Phenolharze, der Polyimide bzw. spezielle Silikonharze. Weiterhin enthält die Mischung als Verarbeitungshilfsstoff ein bei den verwendeten Preßtemperaturen wirksames Gleitmittel.

### Ausführungsbeispiele:

1. Ein Band der Zusammensetzung FeSiCuNbB und einer Dicke von 18 µm wurde während 8 Stunden bei 200 °C unter Stickstoff wärmebehandelt und anschließend in einer Schneidmühle bei Raumtemperatur in Flocken mit einer Kantenlänge < 6 mm zerkleinert. Diese vorzerkleinerten Flocken wurden mit IN₂ gekühlt und dann bei der Temperatur des flüssigen Stickstoffs in einer Prallmühle zu Flakes mit einer Kantenlänge < 160 µm vermahlen.

Die so hergestellten Flakes wurden durch eine Beizbehandlung mit einer Mischung aus Aceton und Phosphorsäure mit einer isolierenden Beschichtung aus Eisenphosphat versehen. Aus dem so vorbereitete Magnetpulver wird folgende Mischung hergestellt:

| | |
|---|---|
| Vitroperm Flakes phosphatiert | 96 Gew% |
| Bindemittel (Phenol- und Silikonharz) | 3,8 Gew% |
| Gleitmittel | 0,2 Gew% |

Diese Mischung wird bei Temperaturen von 250 °C und einem Druck von 6 t/cm² verpreßt.

Im Anschluß an die Formgebung wird der Grünling einer Wärmebehandlung unterzogen die zu einer Nanokristallisation der Magnetlegierung führt. Dazu wird der Grünling unter Stückstoff für 2 Stunden auf eine Temperatur von 550 °C erwärmt.

Der so hergestellte Magnetkern hatte eine rel. Permeabilität von 56 und Ummagnetisierungsverluste bei 100 kHz und einer Induktion von 0,1 T von 620 mW/cm³.

2. Ein Band der Zusammensetzung FeSiCuNbB und einer Dicke von 17 µm wurde während 4 Stunden bei 250 °C unter Stickstoff wärmebehandelt und anschließend in einer Schneidmühle bei Raumtemperatur in Flocken mit einer Kantenlänge < 6 mm zerkleinert. Diese vorzerkleinerten Flocken wurden mit IN₂ gekühlt und dann bei der Temperatur des flüssigen Stickstoffs in einer Prallmühle zu Flakes mit einer Kantenlänge < 160 µm vermahlen.

Die so hergestellten Flakes wurden durch eine Beizbehandlung mit einer Mischung aus Aceton und Phosphorsäure mit einer isolierenden Beschichtung aus Eisenphosphat versehen. Aus dem so vorbereiteten Magnetpulver wird folgende Mischung hergestellt:

| | |
|---|---|
| Vitroperm Flakes phosphatiert | 96 Gew% |
| Bindemittel (Polyimidharz) | 3,8 Gew% |
| Gleitmittel | 0,2 Gew% |

Diese Mischung wird bei Temperaturen von 270 °C und einem Druck von 6 t/cm² verpreßt.

Im Anschluß an die Formgebung wird der Grünling einer Wärmebehandlung unterzogen die zu einer Nanokristallisation der Magnetlegierung führt. Dazu wird der Grünling unter Stückstoff für 2 Stunden auf eine Temperatur von 550 °C erwärmt.

Der so hergestellte Magnetkern hatte eine rel. Permeabilität von 58 und Ummagnetisierungsverluste bei 100 kHz und einer Induktion von 0,1 T von 580 mW/cm³.

3. Ein Band der Zusammensetzung FeSiCuNbB und einer Dicke von 19 µm wurde während 2 Stunden bei 300 °C unter Stickstoff wärmebehandelt und anschließend in einer Schneidmühle bei Raumtemperatur in Flocken mit einer Kantenlänge < 6 mm zerkleinert. Diese vorzerkleinerten Flocken wurden mit lN₂ gekühlt und dann bei der Temperatur von ca. -80 °C in einer Prallmühle zu Flakes mit einer Kantenlänge < 160 µm vermahlen. Die so hergestellten Flakes wurden durch eine Beizbehandlung mit einer Mischung aus Aceton und Phosphorsäure mit einer isolierenden Beschichtung aus Eisenphosphat versehen und anschließend mit einer alkoholischen Methacrylsilanlösung beschichtet. Aus dem so vorbereiteten Magnetpulver wird folgende Mischung hergestellt:

| | |
|---|---|
| Vitroperm Flakes phosphatiert | 96 Gew% |
| Bindemittel (Silikonharz) | 3,9 Gew% |
| Gleitmittel | 0,1 Gew% |

Diese Mischung wird bei Temperaturen von 320 °C und einem Druck von 8 t/cm² verpreßt.

Im Anschluß an die Formgebung wird der Grünling einer Wärmebehandlung unterzogen die zu einer Nanokristallisation der Magnetlegierung führt. Dazu wird der Grünling unter Stückstoff für 1 Stunde auf eine Temperatur von 565 °C erwärmt.

Der so hergestellte Magnetkern hatte eine rel. Permeabilität von 63 und Ummagnetisierungsverluste bei 100 kHz und einer Induktion von 0,1 T von 380 mW/cm³.

4. Ein Band der Zusammensetzung FeSiCuNbB und einer Dicke von 20 µm wurde während 1 Stunden bei 350 °C unter Stickstoff wärmebehandelt und anschließend in einer Schneidmühle bei Raumtemperatur in Flocken mit einer Kantenlänge < 6 mm zerkleinert. Diese vorzerkleinerten Flocken wurden dann bei Raumtemperatur in einer Prallmühle zu Flakes mit einer Kantenlänge < 160 µm vermahlen.

Die so hergestellten Flakes wurden durch eine Beizbehandlung mit einer Mischung aus Aceton und Phosphorsäure mit einer isolierenden Beschichtung aus Eisenphosphat versehen. Aus dem so vorbereiteten Magnetpulver wird folgende Mischung hergestellt:

| | |
|---|---|
| Vitroperm Flakes phosphatiert | 96,4 Gew% |
| Bindemittel (Silikonharz) | 3,5 Gew% |
| Gleitmittel | 0,1 Gew% |

Diese Mischung wird bei Temperaturen von 380 °C und einem Druck von 8 t/cm² verpreßt.

Im Anschluß an die Formgebung wird der Grünling einer Wärmebehandlung unterzogen die zu einer Nanokristallisation der Magnetlegierung führt. Dazu wird der Grünling unter Stückstoff für 1 Stunde auf eine Temperatur von 560 °C erwärmt.

Der so hergestellte Magnetkern hatte eine rel. Permeabilität von 64 und Ummagnetisierungsverluste bei 100 kHz und einer Induktion von 0,1 T von 420 mW/cm³.

5. Ein Band der Zusammensetzung FeSiCuNbB und einer Dicke von 18 µm wurde während 1 Stunden bei 400 °C unter Stickstoff wärmebehandelt und anschließend in einer Schneidmühle bei Raumtemperatur in Flocken mit einer Kantenlänge < 6 mm zerkleinert. Diese vorzerkleinerten Flocken wurden dann bei Raumtemperatur in einer Prallmühle zu Flakes mit einer Kantenlänge < 160 µm vermahlen.

Die so hergestellten Flakes wurden durch eine Beizbehandlung mit einer Mischung aus Aceton und Phosphorsäure mit einer isolierenden Beschichtung aus Eisenphosphat versehen. Aus dem so vorbereiteten Magnetpulver wird folgende Mischung hergestellt:

| | |
|---|---|
| Vitroperm Flakes phosphatiert | 96,4 Gew% |
| Bindemittel (Silikonharz) | 3,5 Gew% |
| Gleitmittel | 0,1 Gew% |

Diese Mischung wird bei Temperaturen von 410 °C und einem Druck von 8 t/cm² verpreßt.

Im Anschluß an die Formgebung wird der Grünling einer Wärmebehandlung unterzogen die zu einer Nanokristallisation der Magnetlegierung führt. Dazu wird der Grünling unter Stückstoff für 1 Stunde auf eine Temperatur von 570 °C erwärmt.

Der so hergestellte Magnetkern hatte eine rel. Permeabilität von 60 und Ummagnetisierungsverluste bei 100 kHz und einer Induktion von 0,1 T von 480 mW/cm³.

## Patentansprüche

1. Verfahren zur Herstellung eines gepreßtem Pulververbundkernes aus einer nanokristallinen Legierung der Zusammensetzung FeSiCuNbB, **dadurch gekennzeichnet, daß** das zur Herstellung des Magnetkernes verwendete Legierungspulver im amorphen Zustand verpreßt wird.

2. Verfahren nach Anspruch 1, **dadurch gekennzeichnet, daß** vor dem Vermahlen und Verpressen eine Wärmebehandlung insbesondere zwischen 200 und 400 °C und insbesondere unter Schutzgas durchgeführt wird, die eine gezielte Versprödung des Materials zum Mahlen bewirkt, die Duktilität der Flakes bei Preßtemperaturen jedoch nicht negativ beeinflußt.

3. Verfahren nach einem der vorherigen Ansprüche, **dadurch gekennzeichnet, daß** abhängig von der Temperatur der Versprödungsbehandlung das Mahlen des vorgetemperten Bandes bei Temperaturen zwischen der Temperatur des flüssigen Stickstoffs und maximal Raumtemperatur erfolgt

4. Verfahren nach einem der vorherigen Ansprüche, **dadurch gekennzeichnet, daß** die Formgebung durch Pressen bei Temperaturen oberhalb der Temperatur der ersten Wärmebehandlung zur gezielten Versprödung des Ausgangsbandes erfolgt, um eine Weiterzerkleinerung des Magnetmaterials durch Sprödbruch sicher auszuschließen.

5. Verfahren nach einem der vorherigen Ansprüche, **dadurch gekennzeichnet, daß** die Wärmebehandlung des Magnetkerns zur Einstellung der, mit dem nanokristallinen Gefüge verbundenen weichmagnetischen Eigenschaften im Anschluß an die Formgebung bei Temperaturen zwischen insbesondere 540 und 580 °C und insbesondere unter Schutzgas erfolgt.
